(19) Europäisches Patentamt
European Patent Office
Office européen des brevets

(11) **EP 2 543 565 B1**

(12) # EUROPEAN PATENT SPECIFICATION

(45) Date of publication and mention
of the grant of the patent:
**15.03.2017 Bulletin 2017/11**

(51) Int Cl.:
***B60T 8/1755*** *(2006.01)*

(21) Application number: **11750806.9**

(22) Date of filing: **04.03.2011**

(86) International application number:
**PCT/JP2011/055047**

(87) International publication number:
**WO 2011/108697 (09.09.2011 Gazette 2011/36)**

(54) **TURNING CONTROL DEVICE FOR VEHICLE**

DREHSTEUERVORRICHTUNG FÜR EIN FAHRZEUG

DISPOSITIF DE COMMANDE DE VIRAGE DESTINÉ À UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010 JP 2010047832**

(43) Date of publication of application:
**09.01.2013 Bulletin 2013/02**

(73) Proprietor: **Honda Motor Co., Ltd.
Minato-ku
Tokyo 107-8556 (JP)**

(72) Inventors:
• **FUTAMURA Tomoyuki
Wako-shi
Saitama 351-0193 (JP)**

• **KOJIMA Takeshi
Wako-shi
Saitama 351-0193 (JP)**
• **OHMURA Kazutaka
Wako-shi
Saitama 351-0193 (JP)**

(74) Representative: **Weickmann & Weickmann
PartmbB
Postfach 860 820
81635 München (DE)**

(56) References cited:
**EP-A1- 0 465 958        EP-A2- 1 426 268
JP-A- 8 048 226         JP-A- 2004 114 794
US-A- 5 448 481         US-A1- 2002 059 023
US-A1- 2002 189 889**

**Description**

Technical Field

The present invention relates to a turning control device for a vehicle that controls turning of a vehicle using braking.

Priority is claimed on Japanese Patent Application No. 2010-047832, filed March 4, 2010.

Background Art

As an example of this type of turning control device, it is known that stabilization of vehicle behavior is achieved by controlling braking of a specific wheel in a direction in which a deviation between a lateral G standard yaw rate, which is calculated on the basis of an acceleration of the vehicle in a right-and-left direction (hereinafter referred to as lateral acceleration) and a vehicle speed, and an actual yaw rate of the vehicle is brought close to 0.

Additionally, in an example of another turning control device, it is known that a yaw moment is assisted and improvement of a turning-round property is achieved by controlling to make right and left braking forces of front wheels different and make right and left braking forces of rear wheels different, according to a turning state (for example, a change rate of a steering angle or the steering angle), during braking (for example, refer to Patent Document 1).

Additionally, it is known that improvement of the turning-round property is achieved by controlling to add a first yaw moment, which is calculated on the basis of a steering angular speed or a steering angular acceleration, and a second yaw moment, which is calculated on the basis of the steering angle, the vehicle speed, and the yaw rate, to calculate a corrected yaw moment, thereby making right and left braking forces of front wheels different and making right and left braking forces of rear wheels different so as to generate the corrected yaw moment (for example, refer to Patent Document 2).

Prior Art Documents

Patent Documents

Patent Document 1: Japanese Patent No. 2572860
Patent Document 2: Japanese Unexamined Patent Application, First Publication No. 2005-153716

US 2002/059023 A1 discloses a turning control device for a vehicle adapted to be capable of generating a yaw moment in a vehicle body by giving a braking force to each of right ad left wheels on the basis of a traveling state of a vehicle, the turning control device comprising: a steering amount detection unit that detects a steering amount of a vehicle; a vehicle speed detection unit that detects or estimates a vehicle speed of the vehicle; a lateral acceleration detection unit that detects an acceleration of the vehicle in a right-and-left direction; a yaw rate detection unit that detects a yaw rate of the vehicle; a first yaw moment control amount calculation unit that determines a first yaw moment control amount on the basis of detection signals of the steering amount detection unit and the vehicle speed detection unit; a second yaw moment control amount calculation unit that calculates a yaw rate deviation between a standard yaw rate and an actual yaw rate and determines a second yaw moment control amount so as to cancel out the yaw rate deviation, wherein the standard yaw rate is calculated on the basis of detection signals of the lateral acceleration detection unit, and the actual yaw is detected by the yaw rate detection unit; and a braking control unit that controls the braking force on the basis of a total braking force control amount acquired by adding the first yaw moment control amount determined by the first yaw moment control amount calculation unit and the second yaw moment control amount determined by the second yaw moment control amount calculation unit.

Summary of the Invention

Problems to be Solved by the Invention

However, in the turning control device described in Patent Document 1, the yaw moment is always assisted during turning while braking. Thus, a case where the yaw moment becomes excessive and stability decreases is possible, and therefore is not feasible. Additionally, the response during usual turning cannot be improved.

On the other hand, in the turning control device described in Patent Document 2, the first yaw moment is greatly reflected during sharp turning (when the steering angular speed or the steering angular acceleration is large). At this time, the turning-round property is improved, but the device is not effective during usual turning. Additionally, the response during usual turning cannot be improved.

Thus, an object of the invention is to provide a turning control device for a vehicle that can improve a turning-round property during usual turning. Means for Solving the Problems

In order to solve the above problems the invention provides a turning control device for the vehicle in accordance with claim 1.

(1) A device related to one aspect of the invention is the turning control device for a vehicle adapted to be capable of generating a yaw moment in a vehicle body by giving a braking force to each of right and left wheels on the basis of a traveling state of a vehicle. The turning control device includes a steering amount detection unit that detects a steering amount of a vehicle; a vehicle speed detection unit that detects or estimates the vehicle speed of the vehicle; a lateral acceleration detection unit that detects an acceleration of the vehicle in a right-and-left direction; a yaw rate detection unit that detects a yaw rate of the vehicle; a first braking force control amount calculation unit that determines a first braking force control amount on the basis of detection signals of the steering amount detection unit and the vehicle speed detection unit; a second braking force control amount calculation unit that calculates a yaw rate deviation between a standard yaw rate and an actual yaw rate and determines a second braking force control amount so as to cancel out the yaw rate deviation, the standard yaw rate is calculated on the basis of detection signals of the lateral acceleration detection unit and the vehicle speed detection unit, and the actual yaw rate is detected by the yaw rate detection unit, and determines a second braking force control amount so as to cancel out the yaw rate deviation; and a braking control unit that controls the braking force on the basis of a total braking force control amount acquired by either adding or multiplying the first braking force control amount determined by the first braking force control amount calculation unit and the second braking force control amount determined by the second braking force control amount calculation unit.

(2) In the device described in above-mentioned (1), the first braking force control amount calculation unit may set the first braking force control amount to be smaller as the vehicle speed increases.

(3) The device described in above-mentioned (1) or (2) further includes a required torque detection unit that detects a magnitude of a required torque on the basis of an accelerator opening degree or an accelerator manipulation amount, and the first braking force control amount calculation unit increases the first braking force control amount as the vehicle speed decreases when a detection signal of the required torque detection unit is smaller than a predetermined value.

(4) In the devices described in above-mentioned (1) to (3), the first braking force control amount calculation unit may increase the first braking force control amount as a turning speed or a turning amount calculated on the basis of a detection signal of the steering amount detection unit increase.

(5) In the device described in above-mentioned (1), the first braking force control amount calculation unit may make the first braking force control amount smaller as a lateral acceleration increases.

Effect of the Invention

In the invention described in above-mentioned (1), the braking force is controlled on the basis of a total control amount obtained by adding or multiplying a feedforward control amount calculated on the basis of a steering input (steering angle) by a feedback control amount calculated on the basis of vehicle body behavior (lateral G and yaw rate). For this reason, the response of steering can be improved while securing the stability of vehicle behavior. Additionally, the followability of steering is also improved. For example, in the process of steering holding after a steering input, such as during steady-state circle turning, a change in the control amount is suppressed and followability is improved.

According to the invention described in above-mentioned (2), the stability of the vehicle behavior can be prevented from declining in a high-speed region.

According to the invention described in above-mentioned (3), the turning-round property during tuck-in where the vehicle speed is a low or middle speed is improved.

According to the invention described in above-mentioned (4), the response of steering during an avoiding operation from a front obstacle or a lane change is improved.

According to the invention described in above-mentioned (5), the vehicle behavior can be prevented from becoming unstable due to braking.

Brief Description of the Drawings

FIG. 1 is a control block diagram in an embodiment of a turning control device for a vehicle related to the invention.

FIG. 2 is a block diagram of a correction unit in the embodiment.
FIG. 3 is a view describing a calculation method of a gain G.
FIG. 4 is a view describing a calculation method of a correction coefficient HS1.
FIG. 5 is a flowchart showing determination processing of a correction coefficient HS2.
FIG. 6 is a view describing a calculation method of a correction coefficient HS3.
FIG. 7 is a block diagram of braking force control amount calculation in the embodiment.

Description of Embodiment

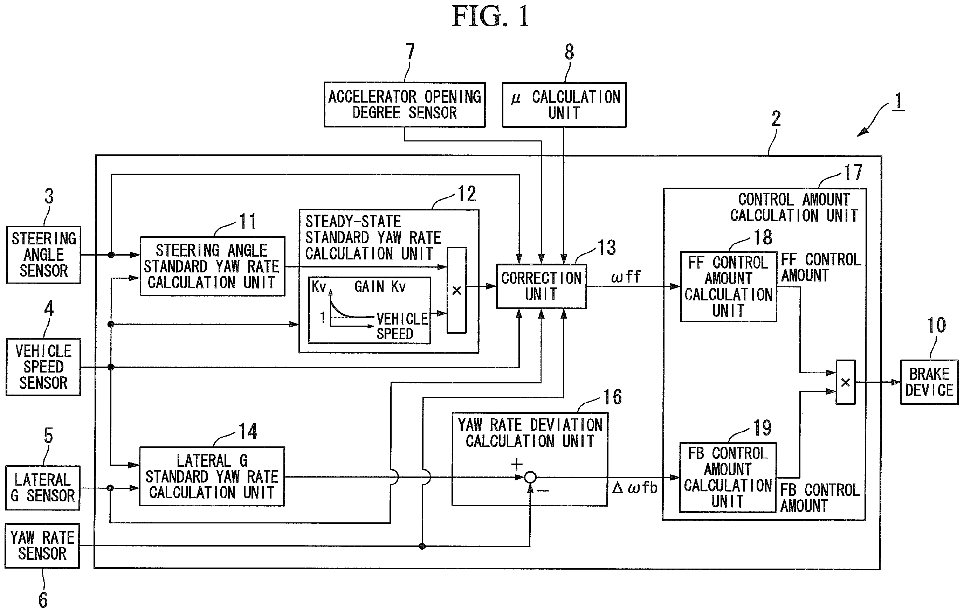

Hereinafter, an embodiment of a turning control device for a vehicle related to the invention will be described with reference to the drawings of FIGS. 1 to 7.

FIG. 1 is a control block diagram in the turning control device for a vehicle of the embodiment.

The turning control device 1 for a vehicle includes a brake control unit 2 and a brake device 10 (braking control unit).

The brake control unit 2 determines the braking force control amounts of front, rear, right, and left wheels according to a traveling state of a vehicle. The brake device 10 controls the braking force of each wheel on the basis of the braking force control amount of each wheel determined by the brake control unit 2.

Detection signals according to detection values are input to the brake control unit 2, respectively, from a steering angle sensor 3 that detects the steering angle (steering amount) of a steering wheel of the vehicle, a vehicle speed sensor 4 that detects the vehicle speed, a lateral acceleration sensor (hereinafter abbreviated as lateral G sensor) 5 that detects the acceleration of the vehicle in a right-and-left direction (vehicle width direction), that is, lateral acceleration (hereinafter abbreviated as lateral G), a yaw rate sensor 6 that detects the yaw rate of the vehicle, and an accelerator opening degree sensor 7 that detects the accelerator opening degree of the vehicle. Additionally, an electrical signal according to a calculated frictional coefficient is input to the brake control unit 2 from a $\mu$, calculation unit 8 that calculates the frictional coefficient between the wheel of the vehicle and a road surface.

The brake control unit 2 includes a steering angle standard yaw rate calculation unit 11, a steady-state standard yaw rate calculation unit 12, a correction unit 13, a lateral G standard yaw rate calculation unit 14, a yaw rate deviation calculation unit 16, and a control amount calculation unit 17. The control amount calculation unit 17 includes a feedforward control amount calculation unit 18 (hereinafter abbreviated as FF control amount calculation unit) and a feedback control amount calculation unit 19 (hereinafter abbreviated as FB control amount calculation unit).

The steering angle standard yaw rate calculation unit 11 (first braking force control amount calculation unit) calculates a steering angle standard yaw rate on the basis of the steering angle detected by the steering angle sensor 3 (steering amount detection unit) and the vehicle speed detected by the vehicle speed sensor 4 (vehicle speed detection unit). Since the steering angle is increased when a driver desires to turn the vehicle positively, the steering angle standard yaw rate increases. That is, when a steering angle standard yaw rate calculated on the basis of a steering angle is large, the steering intention of the driver who desires to turn the vehicle can be estimated to be large.

The steady-state standard yaw rate calculation unit 12 (first braking force control amount calculation unit) calculates a steady-state standard yaw rate gain Kv according to the vehicle speed with reference to the steady-state standard yaw rate gain table 21, and calculates a steady-state standard yaw rate $\omega$_high by multiplying the steering angle standard yaw rate by the steady-state standard yaw rate gain Kv. In the steady-state standard yaw rate gain table 21 in this embodiment, the horizontal axis represents the vehicle speed and the vertical axis represents the steady-state standard yaw rate gain Kv. The table is set so that the steady-state standard yaw rate gain Kv converges on 1 as the vehicle speed becomes larger and the steady-state standard yaw rate gain Kv becomes larger as the vehicle speed becomes smaller. In this embodiment, the steady-state standard yaw rate $\omega$_high has a higher gain as the vehicle speed becomes lower.

A steady-state standard yaw rate $\omega$_high of which the noise is removed by performing temporal change amount smoothing processing or peak hold processing on the steady-state standard yaw rate $\omega$_high is input to the correction unit 13 (first braking force control amount calculation unit).

The correction unit 13 performs adjustment according to a traveling state on the steady-state standard yaw rate $\omega$_high of which the noise is removed, thereby calculating a feed-forward yaw rate control amount (hereinafter referred to as FF yaw rate control amount) $\omega$ff. A calculation method of the FF yaw rate control amount $\omega$ff in the correction unit 13 will be described below in detail.

The lateral G standard yaw rate calculation unit 14 (second braking force control amount calculation unit) calculates a lateral G standard yaw rate $\omega$_low on the basis of the lateral G (lateral acceleration), which is detected by the lateral G sensor 5 (lateral acceleration detection unit), and the vehicle speed which is detected by the vehicle speed sensor 4. The lateral G standard yaw rate $\omega$_low is a yaw rate that can be generated at an existing lateral G, and, for example, is expressed by $\omega$_low=Gy/V. Here, Gy is a lateral acceleration detection value detected by the lateral G sensor 5, and V is the vehicle body speed detected by the vehicle speed sensor 4.

The yaw rate deviation calculation unit 16 (second braking force control amount calculation unit) subtracts the yaw rate (actual yaw rate) detected by the yaw rate sensor 6 (yaw rate detection unit) from the lateral G standard yaw rate ω_low, and calculates a yaw rate deviation Δωfb.

In the control amount calculation unit 17, a feedforward control amount (hereinafter abbreviated as FF control amount) is calculated on the basis of the FF yaw rate control amount ωff in an FF control amount calculation unit 18 (first braking force control amount calculation unit), and a feedback control amount (hereinafter abbreviated as FB control amount) is calculated on the basis of the yaw rate deviation Δωfb in the FB control amount calculation unit 19 (second braking force control amount calculation unit). The control amount calculation unit 17 calculates a total control amount by adding the FF control amount and the FB control amount, and outputs the total control amount to the brake device 10 as a command value. A calculation method of the total control amount in the control amount calculation unit 17 will be described below in detail.

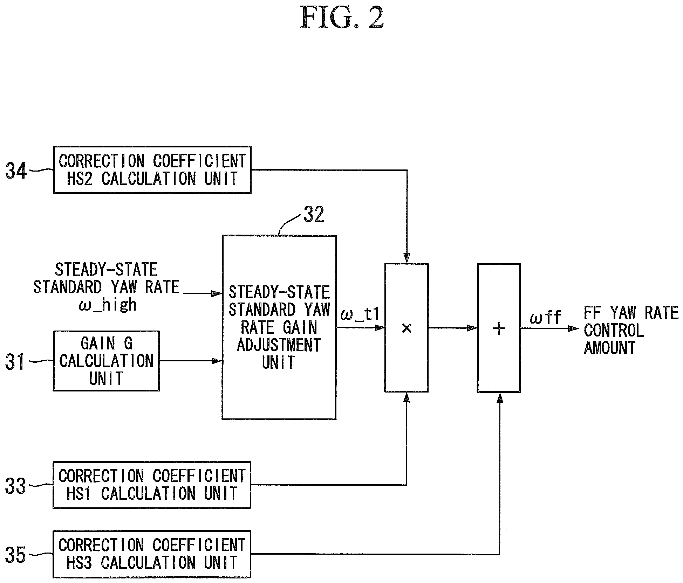

Next, a calculation method of the FF yaw rate control amount ωff in the correction unit 13 will be described with reference to the drawings of FIGS. 2 to 6.

As shown in FIG. 2, the correction unit 13 includes a gain G calculation unit 31, a steady-state standard yaw rate gain adjustment unit 32, a correction coefficient HS1 calculation unit 33, a correction coefficient HS2 calculation unit 34, and a correction coefficient HS3 calculation unit 35.

In the steady-state standard yaw rate gain adjustment unit 32 of the correction unit 13, a steady-state standard yaw rate ω_t1 of which the gain has been adjusted is calculated by multiplying a gain G calculated in the gain G calculation unit 31 by the steady-state standard yaw rate ω_high. Moreover, an FF yaw rate control amount ωff is calculated by multiplying the steady-state standard yaw rate ω_t1 after this gain adjustment by correction coefficients HS1 and HS2 calculated in the correction coefficient HS1 calculation unit 33 and the correction coefficient HS2 calculation unit 34, and adding a correction coefficient HS3 calculated in the correction coefficient HS3 calculation unit 35.

$$\omega\text{ff}=\omega\_\text{high} \times G \times HS1 \times HS2 + HS3 \qquad \text{Formula (1)}$$

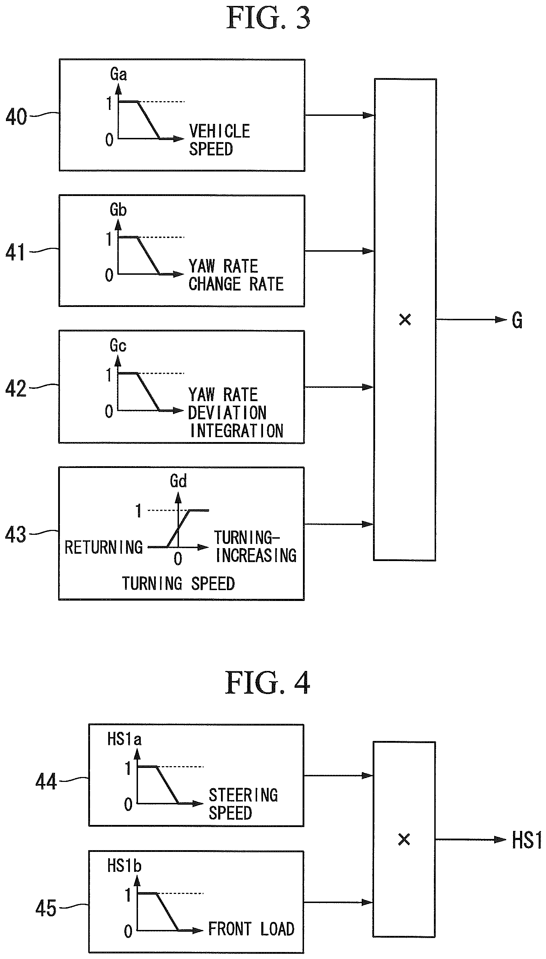

Next, the gain G calculated in the gain G calculation unit 31 will be described with reference to FIG. 3.

The gain G is calculated by multiplying a gain Ga calculated according to the vehicle speed, a gain Gb calculated according to a yaw rate change rate, a gain Gc calculated according to integration value of the yaw rate deviation, and a gain Gd calculated according to a turning speed.

$$G=Ga \times Gb \times Gc \times Gd \qquad \text{Formula (2)}$$

The respective gains Ga, Gb, Gc, and Gd are calculated with reference to the gain tables 40, 41, 42, and 43 shown in FIG. 3, respectively. The respective gain tables 40, 41, 42, and 43 in this embodiment will be described below.

In the gain table 40 from which the gain Ga is calculated, the horizontal axis represents the vehicle speed and the vertical axis represents the gain Ga. In the gain table 40, Ga=1, which is constant, is established in a low vehicle speed region, the gain Ga becomes gradually smaller as the vehicle speed becomes higher in a region where the vehicle speed is within a predetermined range, and Ga=0, which is constant, is established in a high-speed region. Thereby, the FF yaw rate control amount ωff is increased to improve the response and the followability when the vehicle speed is low, and the stability of the vehicle behavior is achieved such that the FF yaw rate control amount ωff is not increased when the vehicle speed is high.

In the gain table 41 from which the gain Ga is calculated, the horizontal axis represents the yaw rate change rate and the vertical axis represents the gain Gb. In the gain table 41, Gb=1, which is constant, is established in a region where the yaw rate change rate is small, the gain Gb becomes gradually smaller as the yaw rate change rate becomes larger in a region where the yaw rate change rate is within a predetermined range, and Gb=0, which is constant, is established in a region where the yaw rate change rate is large. Here, the yaw rate change rate is a temporal change in the actual yaw rate detected by the yaw rate sensor 6, and can be calculated by time-differentiating the actual yaw rate. For example, when severe slalom traveling is performed or when the vehicle behavior is unstable, a large yaw rate change rate appears. At this time, the FF yaw rate control amount ωff should not be increased. Accordingly, when the yaw rate change rate is large, the gain Gb is set to a small value so as not to increase the FF yaw rate control amount ωff.

In the gain table 42 from which the gain Gc is calculated, the horizontal axis represents the yaw rate deviation integration value and the vertical axis represents the gain Gc. In the gain table 42, Gc=1, which is constant, is established in a region where the yaw rate deviation integration value is small, the gain Gc becomes gradually smaller as the yaw rate deviation integration value becomes larger in a region where the yaw rate deviation integration value is within a predetermined range, and Gc=0, which is constant, is established in a region where the yaw rate deviation integration value is large. Here, the yaw rate deviation integration value is a value obtained by integrating the deviation between the lateral G standard yaw rate $\omega$_low and the actual yaw rate detected by the yaw rate sensor 6 from when steering is started. For example, even if this yaw rate deviation is small, the yaw rate deviation integration value becomes larger in a case where the state continues for a long period of time. In such a case, since the vehicle may be gradually brought into a spin state although slow, the FF yaw rate control amount $\omega$ff should not be made large. Thus, when the yaw rate deviation integration value rate is large, the gain Gc is set to a small value so as not to increase the FF yaw rate control amount $\omega$ff.

In the gain table 43 from which the gain Gd is calculated, the horizontal axis represents the turning speed and the vertical axis represents the gain Gd.

In the gain table 43, the gain Gd becomes larger as the turning speed becomes larger, and the gain Gd in a case where the turning speed is positive is set to become larger than that in a case where the turning speed is negative. Here, the turning speed is a value determined on the basis of the time variation of the steering angle detected by the steering angle sensor 3 and the steering angle, and can be calculated by time-differentiating the steering angle and comparing with the steering angle. The cases where the turning speed is positive are when the temporal change amount of the steering angle in a direction apart from a neutral position (straight-ahead direction position) has occurred in a state where the steering wheel is rotationally operated in the same direction and when the temporal change amount of the steering angle to the neutral position (the straight-ahead direction position) has occurred in the state where the steering wheel is rotationally operated in the same direction. The cases where the turning speed is negative are when the temporal change amount of the steering angle has occurred in the direction turned to the neutral position in a state where the steering wheel is rotationally operated in the direction apart from the neutral position (straight-ahead direction position) and when the temporal change amount of the steering angle has occurred in the direction apart from the neutral position in a state where the steering wheel is rotationally operated in a direction in which the steel wheel is returned to the neutral position.

In addition, the turning speed may be defined as positive in a state where the steering wheel is rotationally operated in the direction apart from the neutral position, and the turning speed may be defined as negative in a state where the steering wheel is rotationally operated to the neutral position.

Since it can be estimated that the operation intention of a driver that desires to turn the vehicle greatly is large in the cases where the turning speed is positive, the gain Gd is set to a larger value as the turning speed becomes larger (maximum is Gd=1 which is constant) so that the FF yaw rate control amount $\omega$ff becomes larger. This improves the response of steering. On the other hand, since it can be estimated that the cases where the turning speed is negative are a state where the driver desires to converge operation, the gain Gd is set to a smaller value as the turning speed becomes smaller (the minimum is Gd=0, which is constant) so as not to increase the FF yaw rate control amount $\omega$ff.

This improves the response of steering, for example, during an avoiding operation from a front obstacle or a lane change.

In addition, the gain Gd of the gain table 43 may be calculated on the basis of the turning angle (turning amount) instead of the turning speed and turning acceleration. This is because it can be estimated that the operation intention of the driver who desires to turn the vehicle positively becomes larger as the turning angle becomes larger.

Next, the correction coefficient HS1 calculated in the correction coefficient HS 1 calculation unit 33 will be described with reference to FIG. 4.

The correction coefficient HS1 is a correction coefficient obtained, for example, by supposing the time when the driver turns the steering wheel with the vehicle as a front load, thereby performing the operation of turning the vehicle.

As shown in FIG. 4, the correction coefficient HS1 is calculated by multiplying the correction coefficient HS1a calculated according to the steering speed by a correction coefficient HS1b calculated according to the front load of the vehicle.

$$HS1 = HS1a \times HS1b \qquad \text{Formula (3)}$$

The front load of the vehicle is the movement amount of load to the front of the vehicle and, for example, can be estimated on the basis of a longitudinal acceleration sensor (not shown) that detects the acceleration of the vehicle in the front-and-rear direction. In this case, the longitudinal acceleration sensor can be said to be a load movement amount estimation unit that estimates a load movement amount in the front-and-rear direction.

The respective correction coefficients HS1a and HS1b are calculated with reference to the correction coefficient tables 44 and 45 shown in FIG. 4, respectively. The correction coefficient tables 44 and 45 in this embodiment will be described.

In the correction coefficient table 44 from which the correction coefficient HS1a is calculated, the horizontal axis represents the steering speed and the vertical axis represents the correction coefficient HS1a. In the correction coefficient HS1a table 44, HS1a=1, which is constant, is established in a region where the steering speed is small, the correction coefficient HS1a becomes gradually smaller as the steering speed becomes larger in a region where the steering speed is within a predetermined range, and HS1a=0, which is constant, is established in a region where the steering speed is large.

In the correction coefficient table 45 from which the correction coefficient HS1b is calculated, the horizontal axis represents the front load (load movement amount to the front of the vehicle), and the vertical axis represents the correction coefficient HS1b. In the correction coefficient HS1b table 45, HS1b=1, which is constant, is established in a region where the front load is small, the correction coefficient HS1b becomes gradually smaller as the front load becomes larger in a region where the front load is within a predetermined range, and HS1b=0, which is constant, is established in a region where the front load is large.

If the steering wheel is turned with the vehicle as a front load as mentioned above, the vehicle is easily turned. However, the vehicle behavior is likely to be unstable as the front load becomes larger, and the vehicle behavior is likely to be unstable as the steering speed becomes larger. The correction coefficient HS1 is a correction coefficient for adjusting the FF yaw rate control amount $\omega$ff during such steering.

As a result of calculating the correction coefficient HS1 as described above, the correction coefficient HS 1 becomes 1 in the region where the steering speed is small and in the region where the front load is small. Thus, the FF yaw rate control amount $\omega$ff can be increased, and the turning-round property and the response can be improved. In contrast, since the correction coefficient HS1 becomes smaller than 1 as the steering speed and the front load become larger, the FF yaw rate control amount $\omega$ff can be made small, and thereby, the stability of the vehicle behavior can be secured.

Next, the correction coefficient HS2 calculated in the correction coefficient HS2 calculation unit 34 will be described.

The correction coefficient HS2 is a correction coefficient supposing a case where a lane change (the operation of performing steering to return to an original traveling direction immediately) is made on a road surface (hereinafter abbreviated as high $\mu$ load) with a high frictional coefficient (hereinafter abbreviated as $\mu$) between the vehicle wheel and the road surface.

The correction coefficient HS2 is a gain configured so as to subtract a predetermined decreasing counting value from an initial value in a case where the following conditions are satisfied with 1 as the maximum value, and so as to add a predetermined increasing counting value toward 1 in a case where neither of the following conditions are satisfied. As the conditions, (a) when the frictional coefficient $\mu$ is determined to be high (or when a longitudinal or lateral direction acceleration corresponding to traveling on the road surface run with the high frictional coefficient is detected), (b) when the steering angle is determined to be large, (c) when a lateral G decreasing rate is determined to be large, and (d) when a yaw rate decreasing rate is determined to be large, the predetermined decreasing counting value is subtracted. In addition, the above conditions may be at least one of (a) to (d) or arbitrary combinations of a plurality thereof. Particularly when vehicle behavior convergence performance at a high frictional coefficient is taken into consideration, it is preferable to use combinations of the above (a) and any of the above (b) to (d).

In addition, the frictional coefficient $\mu$ is calculated by the $\mu$ calculation unit 8. Additionally, the lateral G decreasing rate is a decreasing rate of the lateral G (lateral acceleration), can be calculated on the basis of the lateral G detected by the lateral G sensor 5, and the yaw rate decreasing rate is the decreasing rate of the actual yaw rate detected by the yaw rate sensor 6.

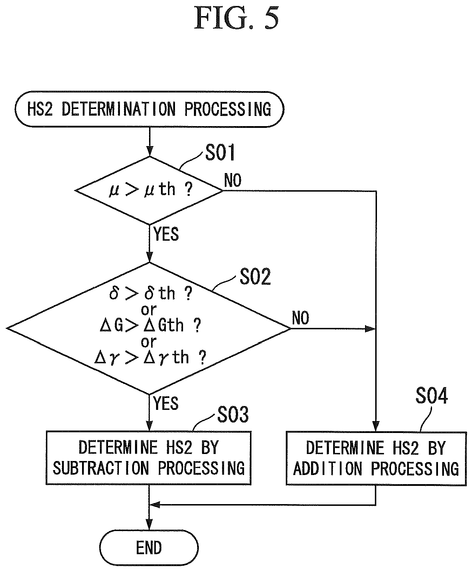

According to a flowchart of FIG. 5, an example of the processing of determining the correction coefficient HS2 will be described.

First, in Step S01, it is determined whether or not the frictional coefficient $\mu$ is larger than a threshold $\mu$th.

If the determination result in Step S01 is "YES" ($\mu$>$\mu$th), the processing proceeds to Step S02 where it is determined whether or not at least one of whether the steering angle $\delta$ is larger than a threshold $\delta$th($\delta$>$\delta$th), whether the lateral G decreasing rate $\Delta$G is larger than a threshold $\Delta$Gth ($\Delta$G>$\Delta$Gth), or whether the yaw rate decreasing rate $\gamma$ is larger than a threshold $\gamma$th ($\gamma$>$\gamma$th) is satisfied.

If the determination result in Step S02 is "YES", the processing proceeds to Step S03 where the correction coefficient HS2 is changed by subtraction processing, and execution of this routine is once ended. This subtraction processing subtracts a predetermined subtraction counting value from the initial value of the correction coefficient HS2 so that the correction coefficient HS2 converges on 0.

On the other hand, if the determination result in Step S01 is "NO" ($\mu$≤$\mu$th), and if the determination result in Step S02 is "NO", the processing proceeds to Step S04 where the correction coefficient HS2 is changed by addition processing, and execution of this routine is once ended. This addition processing adds a predetermined increasing counting value so that the correction coefficient HS2 converges on 1.

In addition, the initial value of correction coefficient HS2 is a predetermined value between 0 and 1.

In a case where the yaw rate and the lateral G decrease abruptly when a lane change is performed on the high

μ road, a large yaw rate may be generated in a direction reverse to a direction in which the driver desires to travel through steering. At this time, if the FF yaw rate control amount ωff is increased, there is a possibility that the tracking performance of the vehicle to steering may deteriorate. The correction coefficient HS2 is a coefficient for suppressing this. That is, in a case where the frictional coefficient μ, the steering angle, the lateral G decreasing rate, and the yaw rate decreasing rate are large, the correction coefficient HS2 is set to a small value so as not to increase the FF yaw rate control amount ωff, and thereby, the convergence performance of the yaw rate after a lane change is improved.

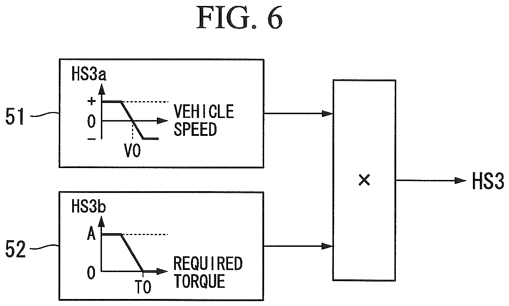

Next, the correction coefficient HS3 calculated in the correction coefficient HS3 calculation unit 35 will be described with reference to FIG. 6.

The correction coefficient HS3 is a correction coefficient obtained, for example, by supposing a case where the driver has performed tuck-in. Tuck-in is a phenomenon in which the vehicle becomes the front load and enters the turning inner side when an accelerator is suddenly returned during turning, and the driver may positively perform a turning operation using tuck-in. However, if the turning operation is performed using this tuck-in when an accelerator is opened from the time when a required torque to the vehicle is large (in other words, when the accelerator opening degree is large), or when the vehicle speed is large, the vehicle behavior is likely to be unstable. The correction coefficient HS3 is a correction coefficient for adjusting the FF yaw rate control amount ωff during such tuck-in.

As shown in FIG. 6, the correction coefficient HS3 is calculated by multiplying a correction coefficient HS3a, which is calculated according to the vehicle speed, by a correction coefficient HS3b, which is calculated according to the required torque of the vehicle.

$$HS3 = HS3a \times HS3b \qquad \text{Formula (5)}$$

In addition, the required torque of the vehicle can be calculated from the accelerator opening degree detected by the accelerator opening degree sensor 7 (required torque detection unit).

The respective correction coefficients HS3a and HS3b are calculated with reference to the correction coefficient tables 51 and 52 shown in FIG. 6, respectively. The correction coefficient tables 51 and 52 in this embodiment will be described.

In the correction coefficient table 51 from which the correction coefficient HS3a is calculated, the horizontal axis represents the vehicle speed and the vertical axis represents the correction coefficient HS3a. In the correction coefficient HS3a table 51, HS3a is a positive constant value in a region where the vehicle speed is smaller than a predetermined range, the correction coefficient HS3a becomes gradually smaller as the vehicle speed becomes larger and becomes a negative value if the vehicles speed exceeds a predetermined speed V0, in a region where the vehicle speed is within a predetermined range, and the HS3a becomes a negative constant value in a region where the vehicle speed is larger than the predetermined range.

In the correction coefficient table 52 from which the correction coefficient HS3b is calculated, the horizontal axis represents the required torque of the vehicle and the vertical axis represents the correction coefficient HS3b. In the correction coefficient HS3b table 52, HS3b is a positive value in a region where the required torque is smaller than a predetermined value T0, and the correction coefficient HS3b=0 is established in a region where the required torque is equal to or larger than the predetermined value T0. Here, the predetermined value T0 is a very small value, for example, is set to a corresponding required torque when the accelerator opening degree is close to zero.

By setting the correction coefficient tables 51 and 52 in this way, the correction coefficient HS3 is set to 0 irrespective of the magnitude of the vehicle speed in a case where the required torque is equal to or larger than the predetermined value T0 (that is, when it is determined that the vehicle speed is not in a tuck-in state). As a result, the FF yaw rate control amount ωff can be prevented from being corrected.

Additionally, in a case where the required torque is equal to or smaller than the predetermined value T0 (that is, when it is determined that the vehicle speed is in a tuck-in state), the correction coefficient HS3 becomes a positive value when the vehicle speed is smaller than V0. Thus, the FF yaw rate control amount ωff can be increased. On the other hand, since the correction coefficient HS3 becomes a negative value when the vehicle speed is equal to or larger than V0, the FF yaw rate control amount ωff can be made small. Moreover, when the required torque is the same in a case where the vehicle speed is smaller than V0, the correction coefficient H3 is set to a large positive value as the vehicle speed becomes smaller, so that the FF yaw rate control amount ωff can be further increased. This can improve the turning-round property during a tuck-in where the vehicle speed is a low or middle speed. On the other hand, when the required torque is the same in a case where the vehicle speed is equal to or larger than V0, the correction coefficient H3 is set to a large negative value as the vehicle speed becomes larger, so that the FF yaw rate control amount ωff is made small, thereby achieving the stability of the vehicle behavior.

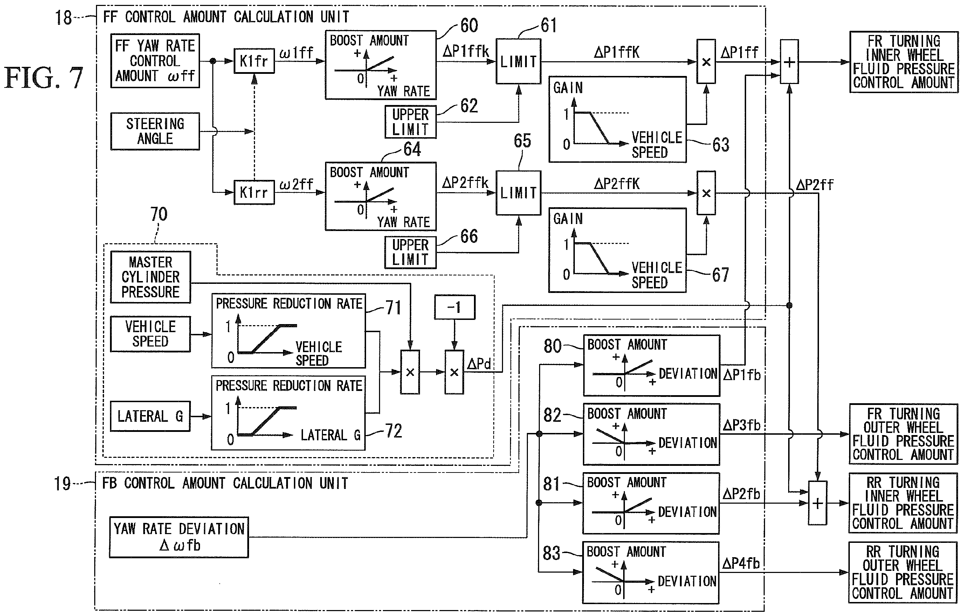

Next, a brake control amount calculation performed in the control amount calculation unit 17 will be described with reference to FIG. 7.

As mentioned above, the FF control amount is calculated on the basis of the FF yaw rate control amount ωff in the FF control amount calculation unit 18 of the control amount calculation unit 17, and the FB control amount is calculated on the basis of the yaw rate deviation Δωfb in the FB control amount calculation unit 19. The control amount calculation unit 17 adds these FF control amount and FB control amount, thereby calculating a total control amount for each wheel.

First, the calculation of the FF control amount in the FF control amount calculation unit 18 will be described.

First, the boost distribution to a turning inner wheel on the front wheel side (hereinafter abbreviated as FR turning inner wheel) and a turning inner wheel on the rear wheel side (hereinafter abbreviated as RR turning inner wheel) is determined on the basis of the steering angle detected by the steering angle sensor 3. On the basis of the boost distribution, a boost coefficient K1fr for the FR turning inner wheel and a boost coefficient K1rr for the RR turning inner wheel are calculated. Here, in a case where the load movement caused by steering is large, the boost coefficient K1fr for the FR turning inner wheel may be set to become larger according to the steering angle.

Calculation of an FF boost amount ΔP1ff for the FR turning inner wheel and calculation of an FF boost amount ΔP2ff for the RR turning inner wheel are performed in parallel on the basis of the boost coefficient K1fr for the FR turning inner wheel and the boost coefficient K1rr for the RR turning inner wheel.

First, the calculation of the FF boost amount ΔP1ff for the FR turning inner wheel will be described. An FF yaw rate control amount ω1ff for the FR turning inner wheel is calculated by multiplying the FF yaw rate control amount ωff, which is calculated by the correction unit 13, by an increasing coefficient K1fr.

Next, a brake fluid pressure boost amount ΔP1ffk of the FR turning inner wheel is calculated according to the FF yaw rate control amount ω1ff for the FR turning inner wheel with reference to the boost amount table 60. In the boost amount table 60, the horizontal axis represents the FF yaw rate control amount ω1ff and the vertical axis represents the brake fluid pressure boost amount ΔP1ffk. In this embodiment, the brake fluid pressure boost amount ΔP1ffk is 0 in a case where the FF yaw rate control amount ω1ff for the FR turning inner wheel is equal to or smaller than 0, and the brake fluid pressure boost amount ΔP1ffk increases as the FF yaw rate control amount ω1ff becomes larger in a case where the FF yaw rate control amount ω1ff for the FR turning inner wheel is equal to or larger than 0.

Next, in a limit-processing unit 61, limit processing is performed so that the brake fluid pressure boost amount ΔP1ffk of the FR turning inner wheel does not exceed an upper limit. This upper limit is any value calculated by the upper limit calculation unit 62, and a sudden change in the fluid pressure boost amount ΔP1ffk is suppressed by being set so as not to exceed this upper limit.

Next, the FF boost amount ΔP1ff for the FR turning inner wheel is calculated by multiplying the brake fluid pressure boost amount ΔP1ffk of the FR turning inner wheel subjected to the limit processing by a gain according to the vehicle speed. In addition, the gain according to the vehicle speed is calculated on the basis of a gain table 63. In the gain table 63, the horizontal axis represents the vehicle speed and the vertical axis represents the gain. Gain=1, which is constant, is established in a region where the vehicle speed is small, the gain becomes gradually smaller as the vehicle speed becomes larger in a region where the vehicle speed is within a predetermined range, and gain=0, which is constant, is established in a region where the vehicle speed is large.

As a result of multiplying the gain according to the vehicle speed in this way, the FF boost amount ΔP1ff of the FR turning inner wheel becomes 0 when the vehicle speed is large. In other words, the FF boost amount ΔP1ff of the FR turning inner wheel is invalidated at a high vehicle speed. This can prevent the vehicle behavior from becoming unstable due to steering-assisting braking at a high vehicle speed. In this embodiment, the gain table 63 constitutes an invalidation section. In addition, instead of multiplying the gain according to the vehicle speed, a limiting value that becomes lower at a higher vehicle speed may be given, and ΔP1ff may be set so as not to exceed this limiting value.

Since the calculation of the FF boost amount ΔP2ff for the RR turning inner wheel is the same as the calculation of the FF boost amount ΔP1ff for the FR turning inner wheel, a simple description will be made.

An FF yaw rate control amount ω2ff for the RR turning inner wheel is calculated by multiplying the FF yaw rate control amount ωff, which is calculated in the correction unit 13, by the increasing coefficient K1rr for the RR turning inner wheel.

Next, a brake fluid pressure boost amount ΔP2ffk of the RR turning inner wheel is calculated according to the FF yaw rate control amount ω2ff for the RR turning inner wheel with reference to the boost amount table 64. Since the boost amount table 64 is the same as the boost amount table 60, the description thereof is omitted.

Next, in a limit-processing unit 65, limit processing is performed so that the brake fluid pressure boost amount ΔP2ffk of the RR turning inner wheel does not exceed an upper limit. The upper limit value is calculated by an upper limit calculation unit 66. The upper limit calculation unit 66 is the same as the upper limit calculation unit 62.

Next, the FF boost amount ΔP2ff for the RR turning inner wheel is calculated by multiplying the brake fluid pressure boost amount ΔP2ffk of the RR turning inner wheel subjected to the limit processing by the gain calculated from the gain table 67. Since the gain table 67 is the same as the gain table 63, the description thereof is omitted. In this embodiment, the gain table 67 constitutes an invalidation section.

Additionally, the FF control amount calculation unit 18 includes an inner wheel pressure reduction amount calculation unit 70. The inner wheel pressure reduction amount calculation unit 70 limits the brake fluid pressure of a turning inner wheel in advance under the premise that the vehicle behavior becomes unstable due to braking at a high-speed and a high lateral G.

In the inner wheel pressure reduction amount calculation unit 70, a pressure reduction rate according to the vehicle speed is calculated with reference to a first pressure reduction rate table 71, a pressure reduction rate according to the lateral G is calculated with reference to a second pressure reduction rate table 72, and a total pressure reduction rate is calculated by multiplying these pressure reduction rates.

In the first pressure reduction rate table 71, the horizontal axis represents the vehicle speed and the vertical axis represents the pressure reduction rate. Pressure reduction rate=0, which is constant, is established in a region where the vehicle speed is small, the pressure reduction rate becomes gradually larger as the vehicle speed becomes larger in a region where the vehicle speed is within a predetermined range, and pressure reduction rate=1 which is constant, is established in a region where the vehicle speed is large.

In the second pressure reduction rate table 72, the horizontal axis represents the lateral G and the vertical axis represents the pressure reduction rate. Pressure reduction rate=0, which is constant, is established in a region where the lateral G is small, the pressure reduction rate becomes gradually larger as the lateral G becomes larger in a region where the lateral G is equal to or larger than a predetermined range, and pressure reduction rate=1, which is constant, is established in a region where the lateral G is large.

Thereby, the total pressure reduction rate is set to the value between 0 and 1 according to the vehicle speed and the lateral G during traveling.

The total pressure reduction rate obtained in this way is multiplied by the master cylinder pressure of the brake device 10 and is multiplied by -1 to obtain an inner wheel pressure reduction amount $\Delta Pd$.

Next, the calculation of the FB control amount in the FB control amount calculation unit 19 will be described.

The FB control amount calculation unit 19 calculates an FB boost amount $\Delta P1fb$ of the FR turning inner wheel, an FB boost amount $\Delta P3fb$ of a turning outer wheel on the front wheel side (referred to as an FR turning outer wheel), an FB boost amount $\Delta P2fb$ of the RR turning inner wheel, and an FB boost amount $\Delta P4fb$ of a turning outer wheel on the rear wheel side (hereinafter referred to as RR turning outer wheel) on the basis of the yaw rate deviation $\Delta \omega fb$ calculated in the yaw rate deviation calculation unit 16. In addition, as a subsequent turning direction, a case where the sign of the deviation $\Delta \omega fb$ is positive, and both the standard yaw rate and the actual yaw rate are positive will be described as an example.

The FB boost amount $\Delta P1fb$ of the FR turning inner wheel is calculated with reference to a boost amount table 80 on the basis of the yaw rate deviation $\Delta \omega fb$. In the boost amount table 80, the horizontal axis represents the yaw rate deviation $\Delta \omega fb$ and the vertical axis represents the FB boost amount $\Delta P1fb$. In this embodiment, the FB boost amount $\Delta P1fb$ is 0 in a case where the yaw rate deviation $\Delta \omega fb$ is equal to or smaller than 0, and the FB boost amount $\Delta P1fb$ increases as the yaw rate deviation $\Delta \omega fb$ becomes larger in a case where the yaw rate deviation $\Delta \omega fb$ is equal to or larger than 0.

The FB boost amount $\Delta P2fb$ of the RR turning inner wheel is calculated with reference to a boost amount table 81 on the basis of the yaw rate deviation $\Delta \omega fb$. In the boost amount table 81, the horizontal axis represents the yaw rate deviation $\Delta \omega fb$ and the vertical axis represents the FB boost amount $\Delta P2fb$. In this embodiment, the FB boost amount $\Delta P2fb$ is 0 in a case where the yaw rate deviation $\Delta \omega fb$ is equal to or smaller than 0, and the FB boost amount $\Delta P2fb$ increases as the yaw rate deviation $\Delta \omega fb$ becomes larger in a case where the yaw rate deviation $\Delta \omega fb$ is equal to or larger than 0.

The FB boost amount $\Delta P3fb$ of the FR turning outer wheel is calculated with reference to a boost amount table 82 on the basis of the yaw rate deviation $\Delta \omega fb$. In the boost amount table 82, the horizontal axis represents the yaw rate deviation $\Delta \omega fb$ and the vertical axis represents the FB boost amount $\Delta P3fb$. In this embodiment, the FB boost amount $\Delta P3fb$ is 0 in a case where the yaw rate deviation $\Delta \omega fb$ is equal to or larger than 0, and the FB boost amount $\Delta P3fb$ increases as the absolute value of the yaw rate deviation $\Delta \omega fb$ becomes larger in a case where the yaw rate deviation $\Delta \omega fb$ is equal to or smaller than 0.

The FB boost amount $\Delta P4fb$ of the RR turning outer wheel is calculated with reference to a boost amount table 83 on the basis of the yaw rate deviation $\Delta \omega fb$. In the boost amount table 83, the horizontal axis represents the yaw rate deviation $\Delta \omega fb$ and the vertical axis represents the FB boost amount $\Delta P4fb$. In this embodiment, the FB boost amount $\Delta P4fb$ is 0 in a case where the yaw rate deviation $\Delta \omega fb$ is equal to or larger than 0, and the FB boost amount $AP4fb$ increases as the absolute value of the yaw rate deviation $\Delta \omega fb$ becomes larger in a case where the yaw rate deviation $\Delta \omega fb$ is equal to or smaller than 0.

That is, in the FB control amount calculation unit 19, the actual yaw rate is smaller than the lateral G standard yaw rate $\omega\_low$ in a case where the yaw rate deviation $\Delta \omega fb$ is equal to or larger than 0. In this case, the FB control amount of each wheel is set in a direction in which the yaw rate is increased (in other words, in a direction in which the yaw rate deviation $\Delta \omega fb$ is cancelled out). Specifically, the FB boost amount is set in a direction in which the brake fluid pressures of the FR turning inner wheel and the RR turning inner wheel are increased, and the FB boost amount is set so that brake fluid pressures of the FR turning outer wheel and the RR turning outer wheel are not increased.

On the other hand, the actual yaw rate is larger than the lateral G standard yaw rate ω_low in a case where the yaw rate deviation Δωfb is equal to or smaller than 0. In this case, the FB control amount of each wheel is set in a direction in which the yaw rate is decreased (in other words, in a direction in which the yaw rate deviation Δωfb is cancelled out). Specifically, the FB boost amount is set in a direction in which the brake fluid pressures of the FR turning outer wheel and the RR turning outer wheel are increased, and the FB boost amount is set so that brake fluid pressures of the FR turning inner wheel and the RR turning inner wheel are not increased.

The control amount calculation unit 17 calculates the total control amount of each wheel as follows, and outputs the total control amount to the brake device 10. A value obtained by adding the FF boost amount ΔP1ff of the FR turning inner wheel, the FB boost amount ΔP1fb of the FR turning inner wheel, and the inner wheel pressure reduction amount ΔPd is defined as a total control amount for the FR turning inner wheel. A value obtained by adding the FF boost amount ΔP2ff of the RR turning inner wheel, the FB boost amount ΔP2fb of the RR turning inner wheel, and the inner wheel pressure reduction amount ΔPd is defined as a total control amount for the RR turning inner wheel. The FB boost amount ΔP3fb of the FR turning outer wheel is defined as the total control amount of the FR turning outer wheel. The FB boost amount ΔP4fb of the RR turning outer wheel is defined as the total control amount of the RR turning outer wheel.

The brake device 10 controls the braking pressure of each wheel according to the control amount of each input wheel.

According to the turning control device for a vehicle of this embodiment, braking pressure is controlled on the basis of the total control amount obtained by adding the FF control amount, which is calculated on the basis of a steering input (steering angle), to the FB control amount, which is calculated on the basis of the body behavior (lateral G and yaw rate). For this reason, the response of steering can be improved while securing the stability of the vehicle behavior. Additionally, the followability of steering is also improved. For example, in the process of steering holding after a steering input, like during steady-state circle turning, a change in the control amount is suppressed and the followability is improved.

[Other Embodiments]

In addition, the invention is not limited to the aforementioned embodiments.

For example, although the total control amount is calculated by adding the FF control amount and the FB control amount in the aforementioned embodiment, it is also possible to multiply the FF control amount and the FB control amount to calculate the total control amount.

Additionally, an estimated vehicle speed estimated on the basis of the detection value of a vehicle wheel speed sensor may be used instead of the detection value of the speed sensor.

Additionally, in the aforementioned embodiment, in the FF control amount calculation unit 18, the FF boost amount ΔP1ff of the FR turning inner wheel and the FF boost amount ΔP2ff of the RR turning inner wheel at a high vehicle speed are invalidated to prevent the vehicle behavior from becoming unstable due to steering-assisting braking at the high vehicle speed. On the other hand, the FF boost amount of the turning inner wheel may also be invalidated even when the steering speed is very high or during an ABS operation.

Industrial Applicability

The response of steering can be improved by loading the turning control device for a vehicle, while securing the stability of the behavior of the vehicle. Additionally, the followability of steering is also improved. For example, in the process of steering holding after a steering input, like during steady-state circle turning, a change in the control amount is suppressed and the followability is improved.

Reference Signs List

1: TURNING CONTROL DEVICE FOR VEHICLE
3: STEERING ANGLE SENSOR (STEERING AMOUNT DETECTION UNIT)
4: VEHICLE SPEED SENSOR (VEHICLE SPEED DETECTION UNIT)
5: LATERAL G SENSOR (LATERAL ACCELERATION DETECTION UNIT)
6: YAW RATE SENSOR (YAW RATE DETECTION UNIT)
7: ACCELERATOR OPENING DEGREE SENSOR (REQUIRED TORQUE DETECTION UNIT)
10: BRAKE DEVICE (BRAKING CONTROL UNIT)
11: STEERING ANGLE STANDARD YAW RATE CALCULATION UNIT (FIRST BRAKING FORCE CONTROL AMOUNT CALCULATION UNIT)

12: STEADY-STATE STANDARD YAW RATE CALCULATION UNIT (FIRST BRAKING FORCE CONTROL AMOUNT CALCULATION UNIT)

13: CORRECTION UNIT (FIRST BRAKING FORCE CONTROL AMOUNT CALCULATION UNIT)

14: LATERAL G STANDARD YAW RATE CALCULATION UNIT (SECOND BRAKING FORCE CONTROL AMOUNT CALCULATION UNIT)

16: YAW RATE DEVIATION CALCULATION UNIT (SECOND BRAKING FORCE CONTROL AMOUNT CALCULATION UNIT)

18: FF CONTROL AMOUNT CALCULATION UNIT (FIRST BRAKING FORCE CONTROL AMOUNT CALCULATION UNIT)

19: FB CONTROL AMOUNT CALCULATION UNIT (SECOND BRAKING FORCE CONTROL AMOUNT CALCULATION UNIT)

63, 67 GAIN TABLE (INVALIDATION SECTION)

**Claims**

1. A turning control device for a vehicle adapted to be capable of generating a yaw moment in a vehicle body by giving a braking force to each of right and left wheels on the basis of a traveling state of a vehicle, the turning control device (1) comprising:

    a steering amount detection unit (3) that detects a steering amount of a vehicle;
    a vehicle speed detection unit (4) that detects or estimates a vehicle speed of the vehicle;
    a lateral acceleration detection unit (5) that detects an acceleration of the vehicle in a right-and-left direction;
    a yaw rate detection unit (6) that detects a yaw rate of the vehicle;
    a first braking force control amount calculation unit (11, 12, 13) that determines a first braking force control amount ($\omega$ff) on the basis of detection signals of the steering amount detection unit (3) and the vehicle speed detection unit (4);
    a second braking force control amount calculation unit (14, 16) that calculates a yaw rate deviation between a standard yaw rate and an actual yaw rate and determines a second braking force control amount ($\Delta\omega$fb) so as to cancel out the yaw rate deviation, wherein the standard yaw rate is calculated on the basis of detection signals of the lateral acceleration detection unit (5) and the vehicle speed detection unit (4), and the actual yaw rate is detected by the yaw rate detection unit (6);
    a braking control unit (17) that controls the braking force on the basis of a total braking force control amount acquired by either adding or multiplying the first braking force control amount ($\omega$ff) determined by the first braking force control amount calculation unit (11, 12, 13) and the second braking force control amount ($\Delta\omega$fb) determined by the second braking force control amount calculation unit (14, 16), and
    a required torque detection unit (7) that detects a magnitude of a required torque on the basis of an accelerator opening degree or an accelerator manipulation amount,
    wherein the first braking force control amount calculation unit (11, 12, 13) increases the first braking force control amount ($\omega$ff) as the vehicle speed becomes smaller when a detection signal of the required torque detection unit (7) is smaller than a predetermined value.

2. The turning control device for a vehicle according to Claim 1,
wherein the first braking force control amount calculation unit (11, 12, 13) makes the first braking force control amount ($\omega$ff) smaller as the vehicle speed becomes larger.

3. The turning control device for a vehicle according to Claim 1 or 2,
wherein the first braking force control amount calculation unit (11, 12, 13) increases the first braking force control amount ($\omega$ff) as a turning speed or a turning amount calculated on the basis of a detection signal of the steering amount detection unit (3) becomes larger.

4. The turning control device for a vehicle according to Claim 1,
wherein the first braking force control amount calculation unit (11, 12, 13) makes the first braking force control amount ($\omega$ff) smaller as a lateral acceleration becomes larger.

**Patentansprüche**

1. Drehsteuervorrichtung für ein Fahrzeug, die dazu ausgelegt ist, in der Lage zu sein, in einem Fahrzeugkörper ein Giermoment zu erzeugen, indem sie jedem von rechten und linken Rädern auf der Basis eines Fahrzustands eines Fahrzeugs eine Bremskraft gibt, wobei die Drehsteuervorrichtung (1) aufweist:

   eine Lenkbetragerfassungseinheit (3), die einen Lenkbetrag eines Fahrzeugs erfasst;
   eine Fahrzeuggeschwindigkeitserfassungseinheit (4), die eine Fahrzeuggeschwindigkeit des Fahrzeugs erfasst oder schätzt;
   eine Querbeschleunigungserfassungseinheit (5), die eine Beschleunigung des Fahrzeugs in Rechts- und Linksrichtung erfasst;
   eine Gierratenerfassungseinheit (6), die eine Gierrate des Fahrzeugs erfasst;
   eine erste Bremskraftsteuerbetragberechnungseinheit (11, 12, 13), die auf der Basis von Erfassungssignalen der Lenkbetragerfassungseinheit (3) und der Fahrzeuggeschwindigkeitserfassungseinheit (4) einen ersten Bremskraftsteuerbetrag ($\omega$ff) bestimmt;
   eine zweite Bremskraftsteuerbetragberechnungseinheit (14, 16), die eine Gierratenabweichung zwischen einer Standard-Gierrate und einer Ist-Gierrate berechnet und einen zweiten Bremskraftsteuerbetrag ($\Delta\omega$fb) bestimmt, um die Gierratenabweichung aufzuheben, wobei die Standard-Gierrate auf der Basis von Erfassungssignalen der Querbeschleunigungserfassungseinheit (5) und der Fahrzeuggeschwindigkeitserfassungseinheit (4) berechnet wird und die Ist-Gierrate von der Gierratenerfassungseinheit (6) erfasst wird;
   eine Bremssteuereinheit (17), die die Bremskraft auf der Basis eines Gesamtbremskraftsteuerbetrags steuert/regelt, der entweder durch Addieren oder Multiplizieren des von der ersten Bremskraftsteuerberechnungseinheit (11, 12, 13) bestimmten ersten Steuerbetrags ($\omega$ff) und des von der zweiten Bremskraftsteuerbetragberechnungseinheit (14, 16) bestimmten zweiten Steuerbetrags ($\Delta\omega$fb) beschafft wird, und
   eine Angefordertes-Drehmoment-Erfassungseinheit (7), die einen Betrag eines angeforderten Drehmoments auf der Basis eines Gasöffnungsgrads oder eines Gasbetätigungsbetrags erfasst,
   wobei die erste Bremskraftsteuerbetragberechnungseinheit (11, 12, 13) den ersten Bremskraftsteuerbetrag ($\omega$ff) mit kleiner werdender Fahrzeuggeschwindigkeit erhöht, wenn ein Erfassungssignal der Angefordertes-Drehmoment-Erfassungseinheit (7) kleiner als ein vorbestimmter Wert ist.

2. Die Drehsteuervorrichtung für ein Fahrzeug nach Anspruch 1, wobei die erste Bremskraftsteuerbetragberechnungseinheit (11, 12, 13) den ersten Bremskraftsteuerbetrag ($\omega$ff) kleiner macht, wenn die Fahrzeuggeschwindigkeit größer wird.

3. Die Drehsteuervorrichtung für ein Fahrzeug nach Anspruch 1 oder 2, wobei die erste Bremskraftsteuerbetragberechnungseinheit (11, 12, 13) den ersten Bremskraftsteuerbetrag ($\omega$ff) erhöht, wenn eine Drehgeschwindigkeit oder ein Drehbetrag, die oder der auf der Basis eines Erfassungssignals der Lenkbetragerfassungseinheit (3) berechnet wird, größer wird.

4. Die Drehsteuervorrichtung für ein Fahrzeug nach Anspruch 1, wobei die erste Bremskraftsteuerbetragberechnungseinheit (11, 12, 13) den ersten Bremskraftsteuerbetrag ($\omega$ff) kleiner macht, wenn eine Querbeschleunigung größer wird.

**Revendications**

1. Dispositif de commande de virage destiné à un véhicule adapté pour être capable de générer un moment de lacet dans une carrosserie de véhicule en donnant une force de freinage à chacune des roues droite et gauche sur la base d'un état de déplacement d'un véhicule, le dispositif de commande de virage (1) comprenant :

   une unité de détection de quantité de braquage (3) qui détecte une quantité de braquage d'un véhicule ;
   une unité de détection de vitesse de véhicule (4) qui détecte ou estime une vitesse de véhicule du véhicule ;
   une unité de détection d'accélération latérale (5) qui détecte une accélération du véhicule dans un sens droite-gauche ;
   une unité de détection de taux de lacet (6) qui détecte un taux de lacet du véhicule ;
   une première unité de calcul de quantité de commande de force de freinage (11, 12, 13) qui détermine une première quantité de commande de force de freinage ($\omega$ff) sur la base de signaux de détection de l'unité de détection de quantité de braquage (3) et de l'unité de détection de vitesse de véhicule (4) ;

une deuxième unité de calcul de quantité de commande de force de freinage (14, 16) qui calcule un écart de taux de lacet entre un taux de lacet standard et un taux de lacet réel et détermine une deuxième quantité de commande de force de freinage ($\Delta\omega$fb) de manière à annuler l'écart de taux de lacet, dans lequel le taux de lacet standard est calculé sur la base de signaux de détection de l'unité de détection d'accélération latérale (5) et de l'unité de détection de vitesse de véhicule (4), et le taux de lacet réel est détecté par l'unité de détection de taux de lacet (6) ;

une unité de commande de freinage (17) qui commande la force de freinage sur la base d'une quantité de commande de force de freinage totale acquise par l'addition ou la multiplication de la première quantité de commande de force de freinage ($\omega$ff) déterminée par la première unité de calcul de quantité de commande de force de freinage (11, 12, 13) et de la deuxième quantité de commande de force de freinage ($\Delta\omega$fb) déterminée par la deuxième unité de calcul de quantité de commande de force de freinage (14, 16), et

une unité de détection de couple nécessaire (7) qui détecte une grandeur d'un couple nécessaire sur la base d'un degré d'ouverture d'accélérateur ou d'une quantité de manipulation d'accélérateur,

dans lequel la première unité de calcul de quantité de commande de force de freinage (11, 12, 13) augmente la première quantité de commande de force de freinage ($\omega$ff) au fur et à mesure de la réduction de la vitesse de véhicule lorsqu'un signal de détection de l'unité de détection de couple nécessaire (7) est inférieur à une valeur prédéterminée.

2. Dispositif de commande de virage destiné à un véhicule selon la revendication 1,
dans lequel la première unité de calcul de quantité de commande de force de freinage (11, 12, 13) réduit la première quantité de commande de force de freinage ($\omega$ff) au fur et à mesure que la vitesse de véhicule augmente.

3. Dispositif de commande de virage destiné à un véhicule selon la revendication 1 ou 2,
dans lequel la première unité de calcul de quantité de commande de force de freinage (11, 12, 13) augmente la première quantité de commande de force de freinage ($\omega$ff) au fur et à mesure qu'une vitesse de virage ou une quantité de virage calculée sur la base d'un signal de détection de l'unité de détection de quantité de braquage (3) augmente.

4. Dispositif de commande de virage destiné à un véhicule selon la revendication 1,
dans lequel la première unité de calcul de quantité de commande de force de freinage (11, 12, 13) réduit la première quantité de commande de force de freinage ($\omega$ff) au fur et à mesure qu'une accélération latérale augmente.

FIG. 1

EP 2 543 565 B1

# FIG. 2

# FIG. 3

# FIG. 4

# FIG. 5

HS2 DETERMINATION PROCESSING

S01

$\mu > \mu$ th ?  —  NO

YES

S02

$\delta > \delta$ th ?
or
$\Delta G > \Delta G$th ?
or
$\Delta \gamma > \Delta \gamma$ th ?  —  NO

YES

S03

DETERMINE HS2 BY
SUBTRACTION PROCESSING

S04

DETERMINE HS2 BY
ADDITION PROCESSING

END

# FIG. 6

FIG. 7

FF CONTROL AMOUNT CALCULATION UNIT — 18

FF YAW RATE CONTROL AMOUNT $\omega$ff

STEERING ANGLE

K1fr → $\omega$1ff

BOOST AMOUNT — 60
YAW RATE → $\Delta$P1ffk

LIMIT — 61

UPPER LIMIT — 62

GAIN — 63
VEHICLE SPEED

$\times$ → $\Delta$P1ff

$+$ → FR TURNING INNER WHEEL FLUID PRESSURE CONTROL AMOUNT

K1rr → $\omega$2ff

BOOST AMOUNT — 64
YAW RATE → $\Delta$P2ffk

LIMIT — 65

UPPER LIMIT — 66

GAIN — 67
VEHICLE SPEED

$\times$ → $\Delta$P2ff

70

MASTER CYLINDER PRESSURE

VEHICLE SPEED

PRESSURE REDUCTION RATE — 71
VEHICLE SPEED

LATERAL G

PRESSURE REDUCTION RATE
LATERAL G — 72

$-1$

$\times$ $\times$ → $\Delta$Pd

FB CONTROL AMOUNT CALCULATION UNIT — 19

YAW RATE DEVIATION $\Delta$$\omega$fb

BOOST AMOUNT — 80
DEVIATION → $\Delta$P1fb

BOOST AMOUNT — 82
DEVIATION → $\Delta$P3fb → FR TURNING OUTER WHEEL FLUID PRESSURE CONTROL AMOUNT

BOOST AMOUNT — 81
DEVIATION → $\Delta$P2fb

$+$ → RR TURNING INNER WHEEL FLUID PRESSURE CONTROL AMOUNT

BOOST AMOUNT — 83
DEVIATION → $\Delta$P4fb → RR TURNING OUTER WHEEL FLUID PRESSURE CONTROL AMOUNT

EP 2 543 565 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010047832 A
- JP 2572860 B
- JP 2005153716 A
- US 2002059023 A1